# EUROPEAN PATENT APPLICATION

(11) **EP 2 194 478 A1**
(43) Date of publication of application: **09.06.2010**
(21) Application number: 08382068.8
(22) Date of filing: 27.11.2008
(51) Int. Cl.: G06F 21/00

(54) **Content protection, distribution , secure access and execution by means of secure and flexible methods, devices and systems based on reconfigurable logic.**

(71) Applicant: Forware Spain, S.L., 18004 Granada (ES)
(72) Inventor: Castillo Lorenzo, José Luis, 18004 Granada (ES)
(74) Representative: ABG Patentes, S.L.

(57) **Abstract**

Methods intended to protect, distribute, access and execute content such as algorithms, electronic circuits, documents and data streams. The protection makes modifying, cloning, distributing, applying reverse engineering techniques or non-authorised use of the content more difficult. Certain parts which are essential for the correct interpretation of the content are expressed by means of a text in an artificial language that is translated into a logic gate and register representation. The mentioned representation is further encrypted in such a way that it can only be loaded and executed in certain reconfigurable logic environments. The devices and systems associated to this protection, distribution, access and execution methods provide a secure, fast and flexible environment intended to achieve this protection based on adaptable, flexible and versatile reconfigurable logic environments.

## Description

### Technical Field of the invention.

The invention relates to the protection of intellectual property and in particular to methods of protecting, distributing and executing at least part of the functionality and data contained within a computer program, electronic circuit, document or data stream while preventing non-authorized modification, cloning, use, distribution, or reverse engineering techniques, and also to the devices and systems associated to these methods of protection, access and distribution.

The developed method provides a secure, fast and flexible environment based on reconfigurable logic that also offers an implementation adaptable to various budgets and multiple distribution possibilities.

### Prior Art

Protection of intellectual property is a current problem increasingly relevant since the beginning of content distribution and reproduction on digital media. Access, manipulation, cloning and reverse engineering techniques have been simplified in such a degree that they enable an individual to illegally take hold of intellectual work of third parties without extraordinary resources.

The industry has been making numerous and continuous efforts to provide better protection for this content. Probably most of the effort was focussed on computer program and electronic circuit protection.

Although there have been many contributions in the form of patents that try to improve security, the techniques used by the attackers also evolve over time, rendering previously adopted protection systems ineffective.

One of the most advanced technical methods to resolve the problem of information protection consists of dividing information in such a way that at least part of it is not accessible to the user. The inaccessible part is stored in a secure location, e.g. an electronic device, often called *"electronic key", "dongle", "token", "TPM"* (*"Trusted Platform Module"*), and sometimes also referred to as secure electronic device.

When this protection strategy is used on software, the use of an external device to store this part of the software is common. The part of the software residing on the external device communicates with the part of the software that is being run on a computer by means of a series of responses and calls.

Thus, some of these protection methods, like those proposed by Zambreno et. al., Proceedings of the IEEE, vol. 49. Pages 419-431 (2006), Zambreno et. al., ACM Transactions on Embedded Computing Systems (TECS), vol. 4. Pages 189-210 (2005) and the publication of the request for the international patent WO 2008/004169, present problems that come from the vulnerability to which a software instance is exposed to when at some moment all the parts belonging to it reside on the computer memory, vulnerable to reverse engineering techniques, or when even not residing on it, its instructions are being processed by a second processor vulnerable to invasive or semi-invasive attacks. When these methods are run on a microprocessor, be it on the device or on a computer, they are affected by the vulnerability posed by the reduced number of instructions it accepts, even when making extensive use of encryption techniques, since its logical and physical behaviour is predicable at some extent, easing the removal of the protection for the content protected by these methods. Even if the information that resides on the secure device is held in a reconfigurable logic environment without microprocessors, unless it is able to reconfigure itself with encrypted content, it will still be vulnerable to advances in reverse engineering techniques that emerge over time, even when the content was obfuscated, leaving no possibility of effective protection.

The problem of the poor security of intellectual property is increasingly important in the field of digital electronics, due to the similarities with software development, distribution and execution models that arise over time, with which it shares some of its weaknesses. The state of the art quoted previously could be used, in some cases, for digital electronics protection by means of supposedly secure devices. This is what the industry has called *secure platform* (TPM, *Trusted Platform Module*). However these devices inherit the same drawbacks previously mentioned.

Finally, in an increasingly competitive and complex context, there is a high demand for devices that can be commercialized in a flexible manner and that can be improved over time by means of reconfiguration even after their commercialization. In general, some of the methods in the state of the art lack the flexibility, when referring to modifying the protection in the form of an update, and others allow it but do not guarantee the security of the content in all the intermediate phases, limiting their possibility of distribution. These and other problems are resolved in the present invention.

### SUMMARY OF THE INVENTION

In order to overcome the previously described limitations in the state of the art, the present invention provides in a first inventive aspect a method of protection according to independent claim 1. Other embodiments of this method are described in the embodiment descriptions found in claims 2-10, as well as programming means according to claim 13. Also, in a second and third inventive aspect, execution and distribution methods are provided for the mentioned protected content in claims 11-12. Together with these methods, in claim 14 is disclosed as a fourth inventive aspect a device that gathers the required features essential to a proper protection of this content. Also a fifth inventive aspect provides a protected distribution system in claim 15.

The invention enables the protection of texts written in an *artificial language* that, in this context, should be understood as a language created by a person or group of people with a specific purpose difficult to express in an ordinary language. An example of these can be artificial languages used to program computers, like C, C++, Pascal, FORTRAN, Java, etc., or those used to describe hardware devices like Verilog, VHDL or similar languages. The latter can be appropriate for the protection of a collection of electronic circuits, as described in an embodiment of the invention.

In a first inventive aspect, the protection begins with a text that holds the contents that must be protected, e.g. a collection of algorithms, and where those parts that are critical are selected, with the possibility of receiving aid in the selection process from methods programmed in a runtime environment. These fragments of text are separated from the original text, while still being necessary for the execution of at least a part of the methods described in the original text.

The invention aims to improve the protection of this text by programming a reconfigurable logic device. These devices are composed of a collection of logic cells that can be interconnected using a large number of combinations that abruptly increases as the number of cells in the device increases.

Thus, the invention comprises that once the critical parts of information are selected, a configuration set R, susceptible to program a reconfigurable logic device, is synthesised from them. The *synthesis* process comprises the translation of the critical parts of a text written in an artificial language to a generic register transfer language RTL, which is further translated to a hardware description language. The resulting text is processed to position each hardware primitive in a position within a matrix of reconfigurable logic cells that are interconnected among them in a way they reproduce the behaviour of the original text written in an artificial language.
Finally, this matrix is translated into a series of bits that form a configuration set R, ready to be programmed into a reconfigurable logic device. In this manner, the critical elements of the original text acquire a distributed representation R, with multiple interconnected logic cells working in parallel. The above-mentioned representation R is unintelligible since a large part of the information about the structure of the original text has been lost in the synthesis process, being very difficult to reconstruct.

Furthermore, accessing configuration R when it is configuring a reconfigurable logic device requires the use of a collection of resources usually necessary to perform an analysis of the configuration via invasive or semi-invasive means, be them optical, chemical, or electronic. Due to the homogeneity of the physical distribution and the layout of blocks of cells within the reconfigurable logic, configuration R is generally arranged in a matrix with a repetitive organizational structure. Even when the above-mentioned resources are available, it is difficult to differentiate between cells that are used in R and those that are not. The percentage of logic being used is usually a small fraction of that available and the distribution of used logic cells is difficult to predict.

The present invention stores a cryptographic key in at least one reconfigurable logic device, and each device is configured in such a way that from that moment on it will only be possible to program it with a configuration R that has been encrypted with its cryptographic key. This facilitates the distribution of R on a computer network or on any other digital medium. In this context, the *encryption* comprises the actions of *encoding -* that is, words or phrases are converted to another form that hides the message, operating at the level of the meaning of what is encoded, or those of *ciphering*, that is letters, small groups of letters, or any other scheme like bits can be converted to another representation that operates at a more basic level.

According to the method provided by the invention, the configuration data is only decrypted inside the reconfigurable logic component, during or after being programmed, discarding any programming data that is not encrypted with the correct key, in such a way that the data can only be used in the device for which it was created. This procedure, in contrast to other protection methods, ensures that no information is exposed outside of the secure device, making access to it unattainable and reinforcing the protection of its content at the same time.

In a further step, the information that was not considered critical, and therefore was not synthesised in R, is processed, producing an executable representation in a device that is able to process logical instructions. This requirement is commonly satisfied by devices with central processing units (CPU) or by devices that contain logic blocks with programmable interconnections and functionality, like *Field Programmable Gate Arrays* (FPGA), *Complex Programmable Logic Devices* (CPLD) and other devices like *Application-Specific Integrated Circuits* (ASIC) or similar.

Also, since the original information has been fragmented into at least two representations, they are associated between each other by communication means. Thus, the exchange of information between these two sets of fragments is made possible, being indispensable for the correct functioning of the methods described in the original text.

In a second inventive aspect, this method to protect information is complemented with a method to execute it or access it. In the case of the information being algorithms or procedures, the inventive aspect refers to executing them, and in the case of it being electronic circuits, the inventive aspect refers to start up and operation.

According to the present invention, when accessing information, e.g. during the execution of a program, a request for the information is sent to the reconfigurable logic device that holds the protected information, and the device accesses the information held within it. The information contained within the device is not sent; it is processed inside according to the received requirement, possibly sending back a response. The device can also send requests to which the program can respond. Both requests and possible responses can be encrypted, since part of the information stored in the device can be an encryption and decryption algorithm. Requests might not be accompanied by a response, rather causing a reaction in the internal context of the reconfigurable logic device that could affect its reaction to later requests.

In a third inventive aspect, the protection method and execution method determine a distribution method. Since the method of distribution is based on the use of logical elements susceptible to being reconfigured great flexibility is provided, with the ability to correct or improve the protection throughout its life period by means of technically and economically feasible procedures. This flexibility eases the distribution of the method and device required for the protection. Also in the present invention, configuration R is encrypted with an encryption key, enabling in consequence its secure distribution on a computer network or digital medium, since the encrypted information can only be used by those reconfigurable logic devices that have previously been configured with the encryption key.

Both the previously described protection method and execution method might be complemented with programming methods that automate at least part of the various steps or stages of the former methods. It is particularly advantageous to use these methods for the selection of fragments of information within a text and for the synthesis of the configuration for the reconfigurable logic device. Furthermore, the various complementary processes that are described in the different embodiments will be favourably carried out if other programming means that facilitate the task are available, since it can be extremely arduous and complex without them.

In a fourth inventive aspect, a protection device required for the invention complements either carrying out the protection, or accessing and distributing the methods described previously. It is essential that this device comprises the ability of implementing reconfigurable logic configuration, thus defining at least one of its components. Also, this component within its own features must hold the possibility of implementing an internal module with the ability to carry out the decryption of configuration R at the moment that it is programmed inside the reconfigurable logic device. This feature is crucial to provide superior security for the critical information contained in R, allowing the device to be reconfigured even in what could be considered an insecure environment. Furthermore, cloning the protection mechanism and the protected content is only possible if the reconfigurable logic device is replicated; this in practice implies a great effort in behavioural analysis or expensive invasive or semi-invasive attacks. The difficulty to analyse its behaviour is increased by means of protection quality tests. Invasive or semi-invasive attacks are hindered by the intrinsic obfuscation used on the configuration set R.

The location at which the encryption key is programmed has great influence on the security of the system and the flexibility in its distribution. As an example, this could be done before the reconfigurable logic device is soldered onto the printed circuit board, after it has been soldered onto the printed circuit (at the location of the final or intermediate distributor, before supplying it to the final user or the next actor in the distribution chain), or at the location of the final user. In some cases the correct choice can avoid "overbuilding", or production of extra units, an increasingly frequent phenomenon due to industrial off shoring. In general, access to the encryption key reduces the protection against reverse engineering, cloning or modification of configuration R.

The embodiments of this device incorporate elements that provide further functionality, that translate into a set of technical features that can be advantageous in different applications of the protection method.

Together with these features the device must include the possibility of communication through a set of means, by means of physical or logic modules that can be associated or restricted to a predetermined context, in this manner complementing the previous methods and thus defining a fifth inventive aspect.

The reconfigurable logic device previously defined is complemented, whenever one wants to access the information contained within, by other devices already known, whose features include elements capable of interpreting and executing logic instructions and managing communication with the protection device by means of different means, defining a system to protect and access information that is susceptible to being distributed over various channels.

### BRIEF DESCRIPTION OF THE DRAWINGS

As a complement of the description being conducted, with the objective of aiding in the understanding of the features of the invention, a set of pictures of illustrative and non-limiting nature is appended as an integral part of this description, in accordance to some examples of advantageous embodiments and their implementation, representing the following:
- Figure 1.: Diagram illustrating the essential parts of the protection method.
- Figure 2.: Diagram illustrating the translation phase.
- Figure 3.: Diagram illustrating the protection of at least part of some data or at least part of a data stream.
- Figure 4.: Diagram illustrating possible obfuscation of at least part of a set of texts.
- Figure 5.: Diagram illustrating the essential parts of a protection system embodiment.
- Figure 6.: Diagram illustrating essential parts of a protection system embodiment.
- Figure 7.: Diagram illustrating essential parts of a protection system embodiment.
- Figure 8.: Diagram illustrating a distribution method embodiment.
- Figure 9.: Diagram illustrating essential parts of a protection system embodiment.
- Figure 10.: Diagram illustrating a protection method embodiment.
- Figure 11.: Diagram illustrating a protection method embodiment.
- Figure 12.: Diagram illustrating a protection method embodiment.
- Figure 13.: Diagram illustrating a protection method embodiment using software.

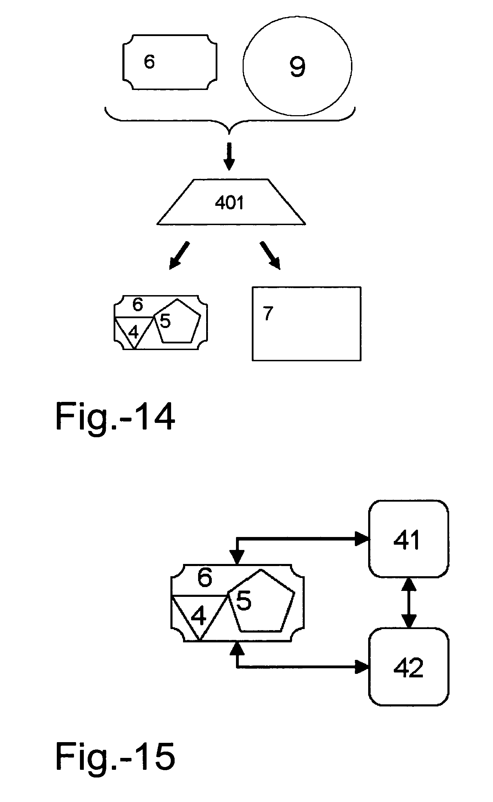

- Figure 14.: Diagram illustrating a protection method embodiment using software.
- Figure 15.: Diagram illustrating a protection method embodiment.

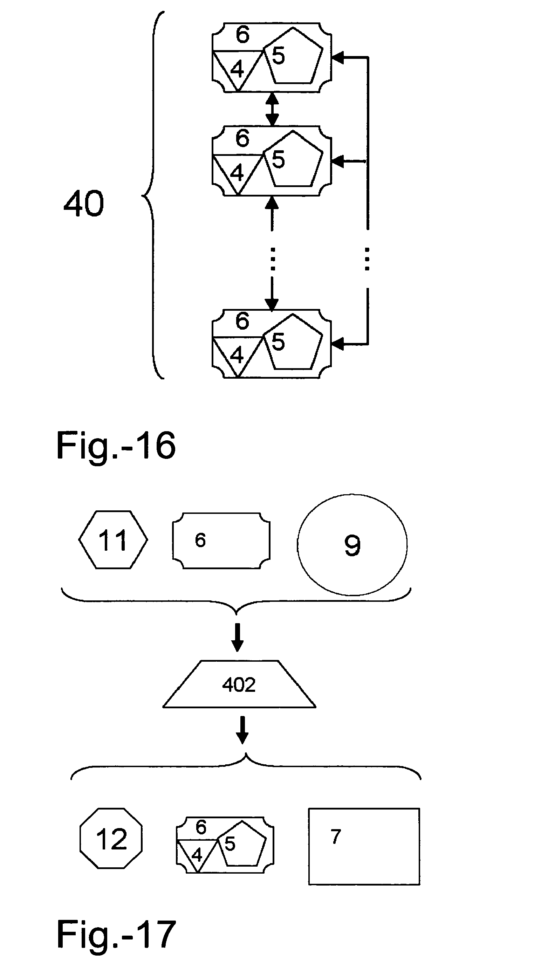

- Figure 16.: Diagram illustrating a protection method embodiment.
- Figure 17.: Diagram illustrating a protection method embodiment using software.

### DETAILED DESCRIPTION OF EMBODIMENTS OF THE INVENTION.

In the following section, different examples of advantageous embodiments of the invention of illustrative and non-limiting nature are described.

### A. Protection Method.

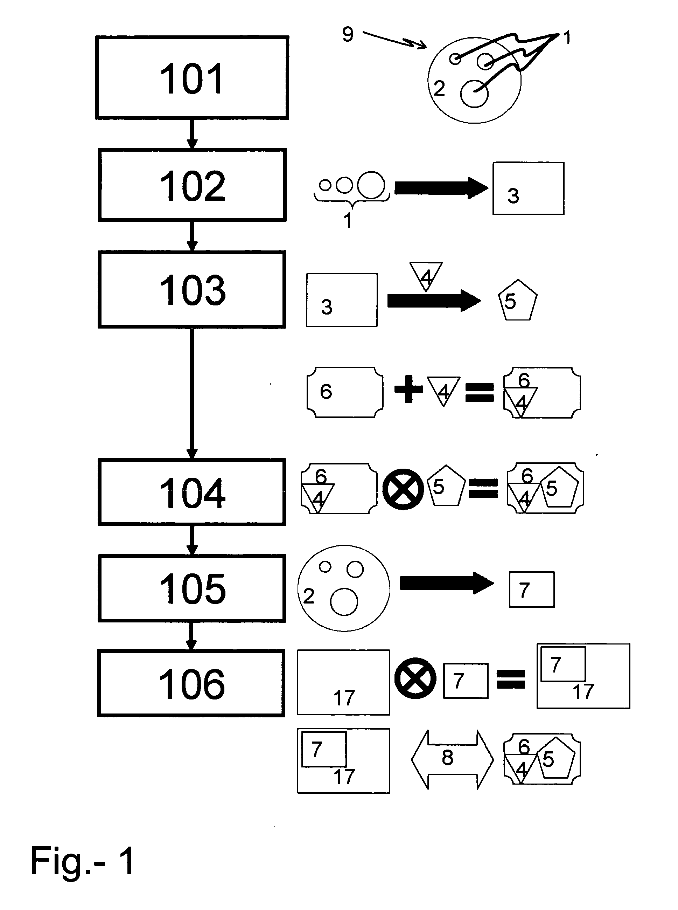

In a first example, an attempt is made to find a protection for a text like that used to describe an electronic circuit or a set or procedures or algorithms. The protection procedure undertaken in this embodiment is schematically shown at least in part in Fig. 1. For simplicity, but without limiting the embodiment, we will assume that it is protecting a text that describes a set of algorithms.

One way of implementing a procedure or algorithms is by expressing them in an artificial language. Examples of artificial languages can be:
- graphic diagrams, where basic diagrams exist that are configured and interconnected;
- natural language, interpreted by the computer just as if it was written by a human with no programming knowledge;
- logical languages, like Prolog, where elements are defined together with the logical and/or functional relations between them;
- object oriented languages, like C++ or Java, where objects delimit the functionality and data associated to more or less abstract concepts;
- functional languages, like Lisp or Haskell, where functions are detailed progressively to express a mathematical calculation independent of the state of the machine that performs the computation;
- imperative languages, like C or Pascal, where the different states of a program are defined as well as the statements that change those states.
- hardware component description languages, like VHDL or Verilog;
- languages that describe networks or schematics like EDIF;
- RTL register transfer languages, that define a reduced instruction set and assume that an unlimited amount of registers are available.
- assembler languages.
Text described in any of those languages can be translated total or partially to another artificial language, from which the synthesis of a configuration R is performed as is shown below.

### A.1 Algorithm.

The **object of protection** can be defined by a set 10 of texts 13, 14, 15 where a plurality of algorithms is expressed in different artificial languages. In many occasions, these texts might include algorithms, data sets and methods that allow the implementation of security policies relative to user or machine licence management, or interface modules containing method and data sets that allow the implementation of communications between these methods. For example, these modules could consist of a licence administration module or a library that provides methods to establish connections using a USB interface.

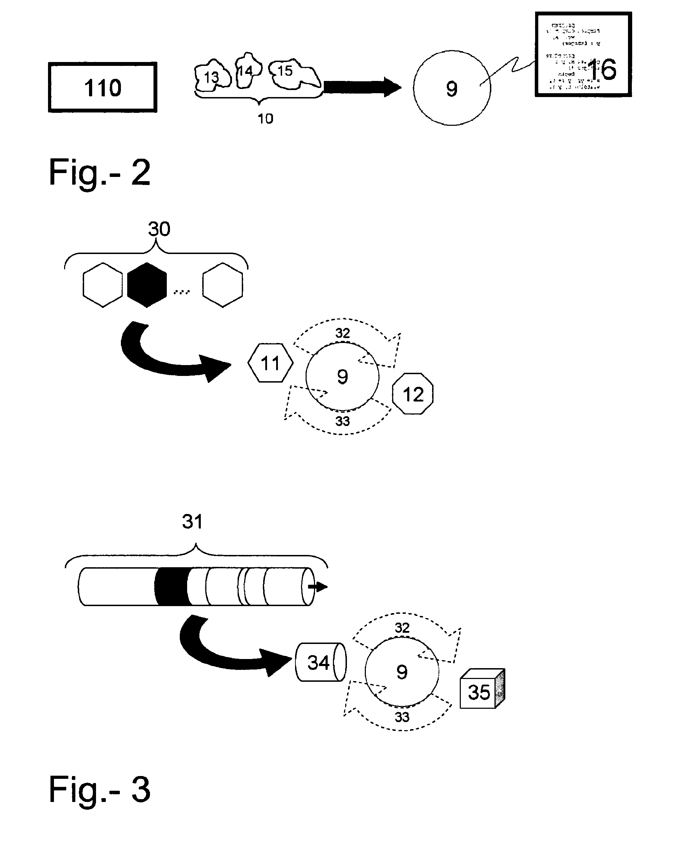

To protect this set 10 of algorithms, they are expressed at least in part in the same *artificial language* 16 as shown in a step 110 in Fig. 2. A text 9 is created, containing at least part of this set of algorithms expressed in the same *artificial language* 16, as is possibly created as well a set of texts derived from 13, 14, and 15, that can be expressed in their own respective artificial languages, and where those parts that where expressed in text 9 have been omitted. Without loss of generality and to aid in the understanding of the embodiment, we will assume that texts 13, 14 and 15 in this embodiment define certain algorithms in Java, Visual Basic and Pascal respectively. At least part of 13, 14 and 15 is translated to an *artificial language* 16 like C.

The protection method, as shown in the diagram of Fig. 1, comprises the following steps:
- 101 - selection of a set 1 of fragments from the text 9 that is to be protected;
- 102 - synthesis of a configuration R 3 from the set 1 of fragments of the text 9, suitable to be programmed into a reconfigurable logic device 6;
- 103 - encryption of configuration 3 by means of an encryption key 4, generating an encrypted configuration 5, and storage of the mentioned encryption key 4 in at least one reconfigurable logic device 6;
- 104 - Programming of at least one reconfigurable logic device 6 with the mentioned encrypted configuration 5;
- 105 -realization, of a representation 7, executable in a device capable or processing logical instructions 17, from the set 2 of fragments not selected from text 9 in step 101, and that communicates with the parts derived from 13, 14 and 15 should they exist.
- 106 - association of the representation 7 , executable in a device capable of processing logical instructions 17, with communication means 8, which connect the representation 7, executable in a device capable of processing logical instructions 17, with the reconfigurable logic device 6.

In order to protect text 9 expressed in an *artificial language* 16, a set or collection of fragments 1 from text 9 is selected in step 101. The selection of this set 1 from the algorithms expressed in text 9 can be carried out by means of programming means, like using a software application 401, or performed by the user. The time taken to accomplish the selection can be significantly reduced if it is performed using a software application 401. The remaining text defines a second set 2 of fragments that includes the remaining expressions in the text 9 that is to be protected.

In order to protect a set 1 of fragments expressed in an *artificial language* 16 a configuration set R 3 is synthesised that is suitable for being programmed into a reconfigurable logic device 6, as is shown in Fig. 102. Although configuration set R 3 could be directly programmed into a reconfigurable logic device 6, its encryption provides protection for this set against its analysis or modification when, for instance, it must be stored or sent over a non-secure environment.

In step 103, it is encrypted by means of an encryption key 4, thus creating an encrypted configuration set 5. Its cloning would be impossible unless key 4 is obtained by performing an invasive attack. Such an attack would be seriously hindered by the complexity of a representation obfuscated in reconfigurable logic. Also in this step 103, an encryption key 4 is programmed into a reconfigurable electronic device 6. In this manner only those configuration sets R 3 that are encrypted with the same encryption key 4 will be able to be programmed into the reconfigurable logic device 6.

In another step 104, a reconfigurable logic device 6 is programmed with a configuration 5 encrypted with the encryption key 4. This is possible in reconfigurable logic devices like FPGAs or CPLDs, and must be understood as applicable to all reconfigurable logic devices that include this technical feature. For clarity and without a limiting nature, an FPGA has been chosen as an example of embodiment, presenting a degree of complexity and versatility proven by its application in various fields of electronic process control.

Given the versatility and complexity of the applications that FPGAs can manage, these devices incorporate an internal logic that inherently improves the obfuscation of the stored configuration due to the large amount of combinations in the interconnections. Also, some FPGAs like Xilinx Virtex-4 are equipped with a decryption module that allows the configuration sets to be protected when they reside outside the FPGA, performing their decryption within the FPGA when they are being programmed. In this manner, the fragments 1 are protected against modification, cloning, distribution and reverse engineering techniques or unauthorized use. Since this set of fragments 1 is essential for a correct operation of the functions expressed in 10, these are also protected against cloning, distribution, and unauthorized use, also increasing the difficulty of modification and reverse engineering tasks.

The second set 2 of fragments expressed in an *artificial language* 16 is processed in step 105. A representation 7, executable in a device capable of processing logic instructions 17, is created as a result of this step 105. This device 17 can be any device capable of executing logic instructions like a CPU, a FPGA or similar. For clarity, it is understood that in this embodiment, this device capable of executing logic instructions 17 is a CPU, without this entailing any limitation.

In a final step this representation 7, executable in a device capable of executing logic instructions, is associated with a set of instructions that enables communication through the communication means 8 between the reconfigurable logic device 6 and the executable representation 7. In this case, the communication mean would be a bus like the one described in the Universal Serial Bus (USB) standard for physical interfaces, but it could be any communication protocol through any other physical or logical port. As an example, the association described in this step corresponds to a link between the part of the algorithms contained in the executable representation 7 and a dynamic library that allows communication using USB, and a hardware module in the secure device that allows the communication of the encrypted configuration 5 through the USB mean; the mentioned instructions will be contained in within encrypted configuration 5 or outside in an independent electronic component.

### A.2 Electronic Circuit.

In another embodiment, instead of protecting an algorithm, we will assume that the object to be protected is an electronic circuit. The motivation for doing so might be diverse, including those cases where at least part of the intelligence of a system resides in the mentioned circuit, triggering the desire for protection, or when its electronic configuration is considered to be exposed to external attacks. The electronic circuit might be expressed in any circuit description language, like for example:
- VHDL and Verilog languages;
- System description languages like SystemC or SystemVerilog;
- languages traditionally used for *software* programming like C;
or any other graphic or textual format that allows synthesis and/or description of at least part of the behaviour or structure and interconnections of a circuit like a collection of configurable logic cells.

That is, the part of the mentioned circuit that is to be protected can be expressed by means of a collection of texts in a circuit description language. In this case, the protection method can take advantage of the previous embodiment to protect this set of texts that would be equivalent to 13, 14 and 15, but expressed in a language that while being different from a programming language, it is still included in the previously mentioned definition of an *artificial language.*

Again, in a step 110, at least part of this set of texts 13, 14 and 15 would be translated into a text 9 expressed in an *artificial language* 16. This language could be, as it is in the previous embodiment, C language, or without loss of generality any other *artificial language*.

A method of protection would then be applied like the one described in the previous embodiment, schematically described in Fig. 1, which includes steps 101, 102, 103, 104, 105 and 106 of Fig. 1. In this manner, it would be possible to protect at least part of an electronic circuit by substituting this part for an executable representation 7 that works in a device capable of executing logic instructions 17 that requires the information contained within a reconfigurable logic device 6 for its correct operation.

This embodiment means expressing the circuit as a combination of the part of the circuit that has not been expressed as a text 9, the protected part of the circuit encrypted using the encryption key 4 that is in the reconfigurable logic device 6, and the part from which an executable representation 7 is obtained. Although any combination of the mentioned parts in a hardware platform can be valid, for clarity we point out that both the non protected part of the circuit and the protected part could be incorporated into the same board, and it would still be possible to integrate a reconfigurable logic device 6 on the same board, thus showing an example of embodiment of a circuit protected against modification, cloning, distribution reverse engineering techniques or unauthorized use.

### A.3 Interfaces.

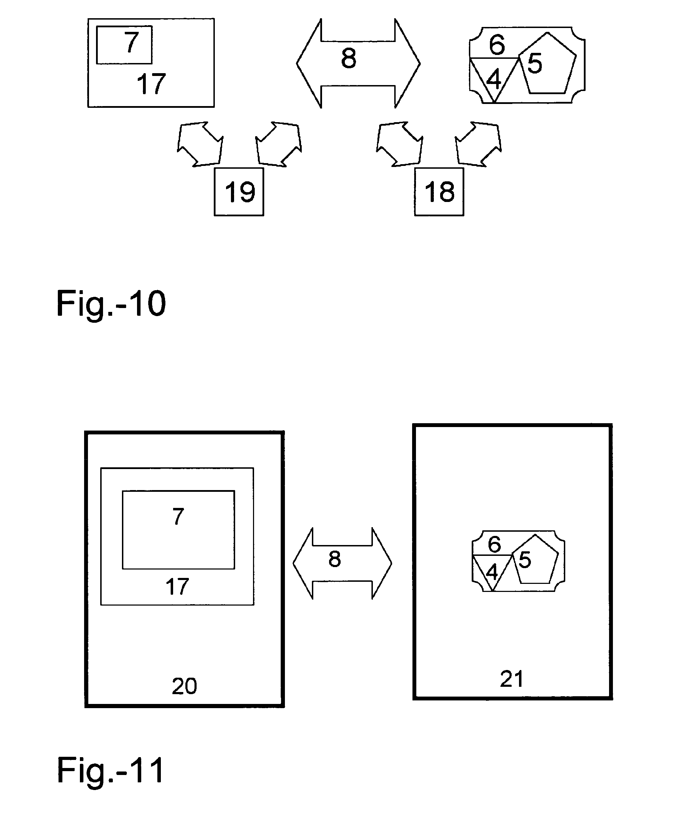

Another embodiment can take advantage of the fact that communication between the reconfigurable logic device 6 and the executable representation 7 in a device capable of processing logical instructions 17 through the communication means 8, can be performed by using a set of instructions like those usually defined by an interface, as shown in Fig. 10. Hence, in another embodiment, the communication means are used by a set of instructions 19 that can be associated or integrated in step 106 into the executable representation 7. It is possible to associate or integrate the set of fragments 1 with an interface 18 before synthesising configuration R 3, or, the set of fragments 1 and the interface 18 could reside on different devices, in which case they could be associated after R 3 has been synthesised.

The association of the set of fragments 1 with an interface 18, that not only is transformed when synthesising a configuration R 3 suitable for being programmed into a reconfigurable logic device, but is also subsequently protected by encryption, increases the protection provided by the method.

In another embodiment, an FTOKEN code is executed. This code allows the conversion of a set of texts expressed in C to VHDL or EDIF that is later synthesised into a configuration set R 3. In the case of text 9 being expressed in an *artificial language* 16 different from C, but still wanting to use the FTOKEN code, it would only be necessary to translate the set of fragments 1 to the C language. Thus a conversion process occurs from methods that define software to a set of intrinsically parallel and combinatorial circuit structures that at their simplest level are interconnected logic gates. However, the complexity of those structures might be increased to represent circuits like state machines, general-purpose processors or dedicated processors for a specific application, that allow the execution of a particular instruction set.

When code like FTOKEN is used, certain advantages can be obtained like automatic generation of interfaces 18 and 19 from text 9, as well as automated synthesis of configuration R 3 and generation of the executable code of representation 7, reducing the time that is required to carry out the protection of the information.

On one hand this configuration R 3 can be seen as equivalent to the operation of a set of logic components that work in parallel. The complexity of an analysis of this configuration R 3 strongly increases as the number of logic components grows, increasing the difficulty of an analysis of the procedures contained in interface 18 by means of reverse engineering techniques. Also, combined with the encryption of this configuration set R 3 with an encryption key 4, accessing the procedures contained within interface 18 is made even more complicated, which is important when R 3 has to be stored in what is considered a non-secure environment.

On the other hand, the association of the representation 7, executable in a device capable of processing logic instructions 17, with an interface 19, can be done depending on the flexibility and security requirements. As an example, they can be associated by means of static links created by a compiler program, by dynamic links provided by an operating system or by means of external applications that allow executable modules to be connected using local or remote procedure calls, like COM, DCOM and CORBA servers. An example of embodiment would include the use of a dynamic library that contained the necessary classes to communicate a USB device with a program designed to work under an operating system on a CPU contained within a personal computer.

The association of specific interfaces can reinforce the protection of the method against unauthorized use of the protected contents when those interfaces are interdependent, since the procedures contained in interface 18 are protected, and therefore are not easily accessed. Since interfaces 18 and 19 are interdependent, any modification to interface 19 associated to a representation 7, executable in a device capable of processing logic instructions 17, could render inoperable the communication between the mentioned executable representation 7 and the encrypted configuration R3 in the reconfigurable logic device 6.

If the interface 19 is associated to the hardware platform and/or some user, any cloned devices could not be distributed unless the representation 7, executable in the device capable of executing logic instructions 17, is also modified.

### A4. Hardware Platforms.

When using any of the preceding embodiments, there are several alternatives in order to locate both the reconfigurable logic device 6 and the device capable of executing logic instructions 17 where the executable representation 7 will be executed: they can be integrated into the same circuit board, or on different circuit boards. In this last option, both boards can be included in one same hardware platform 20 like the one formed by a Personal Computer (PC) that includes a device capable of executing logic instructions 17 (CPU), and its devices and peripherals among which will be included a USB key that contains a reconfigurable logic device 6 like an FPGA. Another possibility is that the reconfigurable logic device 6 and the device capable of executing logic instructions 17 where executable representation 7 will be executed are on different hardware platforms, 20 and 21. In this case, an embodiment example would be to place the reconfigurable logic device 6 on a server (hardware platform 20) connected to a client (hardware platform 21), that can be a PC where the CPU is the device capable of executing logic instructions 17 where the executable representation 7 is executed, over a network like Internet using the TCP/IP protocol.

In another embodiment, the reconfigurable logic device 6 can be integrated into a hardware platform 21 that works as a server, and the electronic circuit to be protected would be connected to the device through a network using buses, physical ports (USB, PCI, etc.) or logic ports (like TCP/IP, UDP/IP ports, radio connection: wireless, Bluetooth etc.). This allows multiple devices capable of executing logic instructions 17 to connect to a single reconfigurable logic device 6, so that it can be shared.

In another embodiment, various devices capable of executing logic instructions 17 reside in the same hardware platform 20, where there is also a reconfigurable logic device 6. If this platform 20 is composed of a single printed circuit board with its hardware components, the reconfigurable logic device 6 could act as a TPM, a secure device that takes the responsibility of protecting a whole heterogeneous platform with multiple intelligent components.

### A. 5 Encrypted Communication.

In another embodiment the communication between the reconfigurable logic device 6 and the periphery is encrypted by means of coding or ciphering algorithms, rendering an interception of the communication through communication means 8 more difficult. DES, 3-DES, AES, RSA, etc. would be examples of encryption algorithms.

### A.6 Interface Associated Identification.

In another embodiment, the interface 18 and/or 19 are associated by means of authentication techniques to the devices included in the hardware platform, generally one or various integrated circuits (ICs). This hardware platform can be the same one or a different one following the example of the previous embodiment, e.g. interface 19 could be associated to an IC included in the hardware platform that contains the device capable of executing logic instructions 17. This association increases the complexity of the protection system, and in consequence improves the protection against cloning the reconfigurable logic device, since it would not only be necessary to have a reconfigurable logic device 6 that contains an encrypted configuration 5 from configuration set R 3 using an encryption key 4, but also it would be necessary to communicate it to a specific hardware platform associated to he device capable of executing logic instruction 17, possibly requiring a correct authentication between the interfaces for it to operate. In the simplest example, the interface authentication data are used as complementary encryption and decryption keys, and they are used to encrypt the communication over the communication means 8.

In another embodiment, the interfaces 18 and/or 19 are associated by means of authentication techniques associated to users, like for example entering a code. This method allows more flexibility when distributing the content to be protected.

### A.7 Biometric Identification.

In another embodiment, users are identified using biometric parameters. These include physiological parameters like the iris, fingerprints or the result of a specific behaviour like a signature or the voice. Associating identification to these parameters reinforces the protection of the content against modification, cloning, distribution, reverse engineering techniques and non-authorized use granting highly individualized access.

### A.8 Set of Reconfigurable Log-ic Devices.

Another embodiment considers the possibility of synthesising configuration R 3 for a set 40 of reconfigurable logic devices instead of just one reconfigurable logic device 6. The underlying motivation to synthesise a set of configurations from a collection of fragments 1 of text 9 that is to be protected can be diverse, including the requirement for more devices that allow the protection of a higher volume of fragments 1 of text 9, or increasing the complexity of the relation between the content of these fragments, thus increasing the difficulty to access them and improving protection against modification, cloning, distribution, reverse engineering techniques or unauthorized use.
The programming means 401 that automatically generate interfaces for communication between devices can be used to facilitate interconnection of the different reconfigurable electronic devices.

### A.9 Memory.

In another embodiment, the option of storing some of the methods contained in 1 in memory means 41 associated to the reconfigurable logic device 6 is gathered. In other embodiments, the configuration set R 3 in its decrypted form, or, in order to increase the security, the encrypted configuration set 5, is stored in the memory means. These variants allow an increase in the memory capacity of the reconfigurable logic device 6.

The same memory means can be used to store data that due to the size cannot be stored within the reconfigurable logic device 6. These data could be encrypted with an encryption key contained within the reconfigurable logic device 6; as a result the data would be as secure as if it was stored in 6.

### A.10 Processor.

Another embodiment considers the possibility of processing some of the methods contained in 1 in processing means 42, placed together with the reconfigurable logic device 6 or even inside it. This way the advantages of the obfuscation provided by the reconfigurable logic can be complemented by the ability to process a great number of functions of the processor, keeping the electronic circuit smaller and with a low cost.

### A.11 Virtual version.

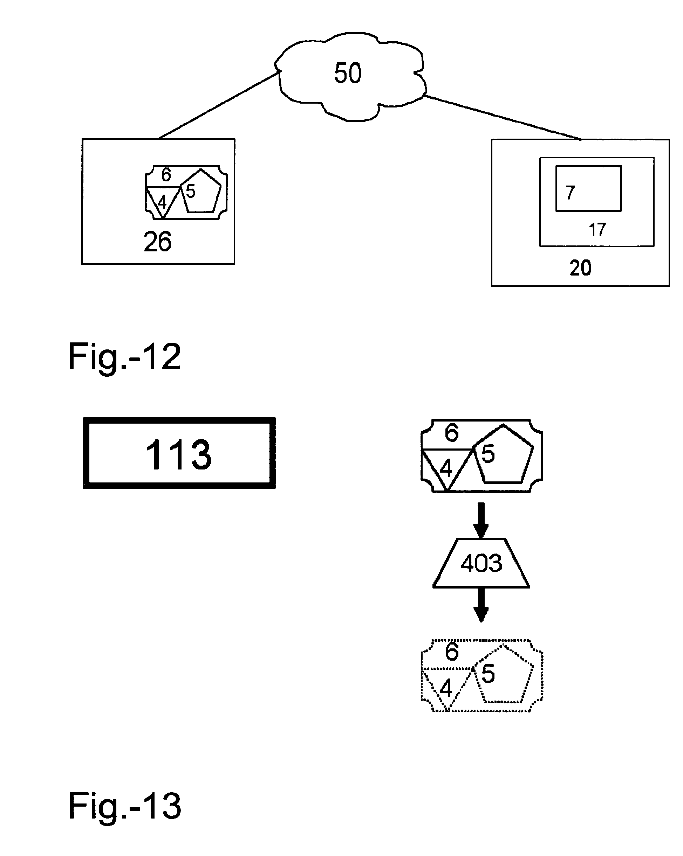

In another embodiment shown in Fig. 12, there is provided a step 113 where the processing of the reconfigurable logic device occurs by means of programming methods 403 that generate a virtual version of at least the reconfigurable logic device 6 that contains the representation 5 encrypted with the encryption key 4, derived from the configuration set R 3.

In another embodiment, this virtual representation includes not only the reconfigurable logic device but also can include memory means 41 and/or processing means 42, using another option of the programming means 403.

The use of virtual versions of the different devices that compose the invention is useful in those cases where there is a desire to distribute evaluation versions quickly, without incurring in production or distribution costs. Virtual versions usually consist of one or various executable representations in devices capable of processing logic instructions. They can be distributed, for example, over a computer network and be executed on the same device 17 that is executing the executable representation 7. At the same time, these virtual versions of the reconfigurable logic device 6 keep a high level of obfuscation, thus increasing their security even though they are being executed in non-secure environments like the device 17.

### A.12 Remote platform.

Any of the previous embodiments, including the virtual ones, are susceptible to being implemented in a manner that allows the reconfigurable logic device 6 to be stored on a remote hardware platform 26, e.g. a server, that communicates over a computer network 50 with the hardware platform that contains the representation 7 executable in a device capable of processing logic instructions 17, as shown in Fig. 12. An example would be a server-client architecture where a protected algorithm is located on the server. This embodiment provides multiple advantages when it comes to distributing algorithms, circuits, data or data streams protected by means of any of these methods. Specifically, it achieves fast distribution, reduces production and distribution costs, and grants a high level of security since the remote server is not physically accessible.

### A.13 Obfuscation.

Among the techniques to protect a set of information like the one included in a text 9 by means of an *artificial language* 16, one is the obfuscation of the mentioned text, *i*. *e*., the transformation of the basic units of the text 9 to another form that is not intelligible, so that reverse engineering techniques over the parts of text that have been obfuscated are avoided.

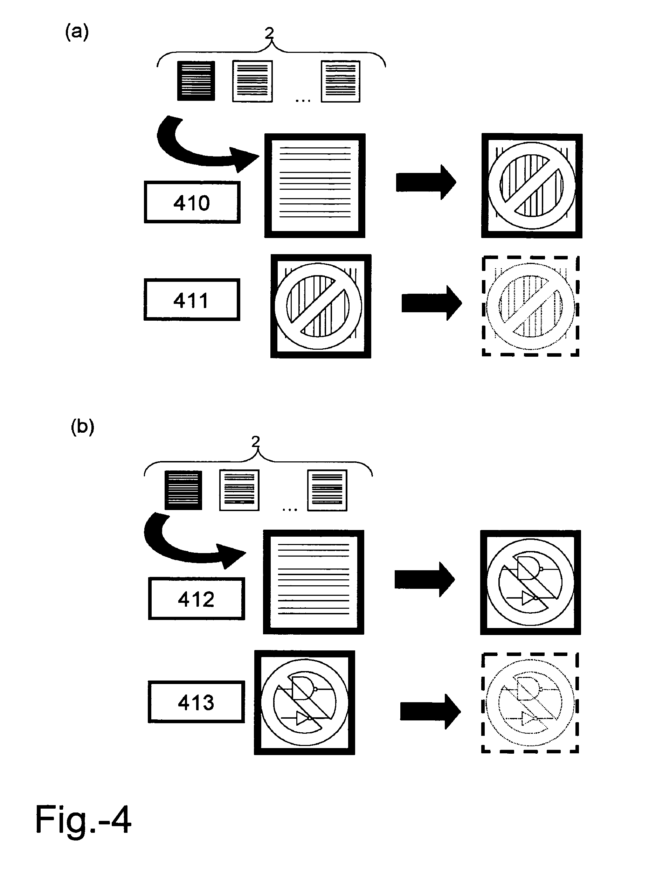

It is possible to apply these obfuscation techniques on part of the texts that comprise the fragments of the second set 2 of fragments in which the remaining expressions of text 9 to be protected are held, as is schematically shown in step 410 of Fig. 4. This can also be applied when they are expressed in languages that use intermediate code, like Java or the Microsoft .NET platform for example, so in this case the executable representation 7 obtained from part 2 that had not been selected in step 101, is an intermediate code, ready to be executed, and that can be susceptible to a reverse engineering attack. Therefore, the obfuscation of part of the second set 2 of fragments in which the remaining expressions of text 9 that is to be protected are held turns out to provide a higher protection of information.

The present invention includes the following possible combinations regarding the possible origin of the texts that are to be obfuscated:
- in an embodiment, this obfuscation is performed over at least a part of the interface 19;
- in another embodiment, it is performed over at least a part of the combination of interface 19 and the second set 2 of fragments, in which the remaining expressions of text 9 that is to be protected are held.
- In another embodiment, it is performed over a part of the second set 2 of fragments, in which the remaining expressions of text 9 that is to be protected are held.

Also, another embodiment generates a virtual version of this obfuscation, represented in the step 411 of the Fig. 4.

Another embodiment comprises a text obfuscation method by means of synthesising a configuration suitable to be programmed in a reconfigurable logic device 6, as schematically represented in the step 412 of the Fig. 4.

In another embodiment, a virtual version of this configuration suitable to be programmed into a reconfigurable logic device 6 is generated, as is schematically shown in the step 413 of the Fig. 4.

In another embodiment, the protection methods described in this inventive aspect are used to protect at least part of a set 10 of algorithms.

### A.14. Time-based usage limitation

In an embodiment, keeping track of the time of possession or usage of the reconfigurable logic device 6 can further control the protection. This allows the definition of a time interval or number of times in which the information exchange can occur, after which, when the validity of the permissions associated to the user or the hardware platform end, the reconfigurable device executes deactivation mechanisms that prevent further access to it.

In an embodiment the possession or usage time control method is autonomous and is designed against possible attacks that intend to restart or alter the time count, in a manner that if it is modified, it will render it useless in terms of accessing the protected information. In an embodiment the value of the current time is stored in a volatile memory powered by a batter. In this way, if the battery that provides the power required for its operation is manipulated by extracting it, the information in the memory will be erased.

In another embodiment a counter is used that keeps both the current and previous values using, for example, a volatile memory. The counter only increments when the current and previous values are consecutive, or when the current value is initialized to a previously established value within the reconfigurable logic device 6. If these conditions are not met, the rest of the reconfigurable logic device 6 is disabled and the reconfigurable logic device 6 stops from working, thus protecting the access to information in presence of external attacks. These variants minimize the vulnerability of the method against "overclocking" or "glitching" attacks, based on clock signal manipulation, resetting or any other control signal. If the alteration of these signals leads to the corruption of the memory state, and if this corruption causes an illegal value of the current and previous values of the counter, the reconfigurable logic device 6 is disabled.

Time is delimited in such a way that when the counter reaches a value previously established in the reconfigurable logic device 6, this reconfigurable logic device 6 is disabled at least in part. Once this point is reached, the reconfigurable logic device 6 must be reprogrammed or its counter must be reset to an initial value that grants access to it. Any attempt to reset the time count by means of invasive attacks will fail since the memory looses at least part of its content when the battery is disconnected.

In another embodiment, a counter that keeps the current time value and the previous time value in a volatile memory keeps the time. To improve the security, the counter can use a non-binary representation, with the aim of increasing the Hamming distance of two representations of consecutive numbers. Thus the chance of an irregular alteration of the volatile memory resulting in the current and previous values of the count being consecutive is reduced.

In another embodiment the time count is implemented with a counter outside the reconfigurable logic device 6. This counter could be an RTC (Real Time Clock) and be physically located near device 6. The advantage of RTCs is that they consume little power, thus increasing the lifespan of the battery. Some RTCs allow and encrypted access to them, improving the level of security.

In another embodiment, the RTC counter is implemented inside the reconfigurable logic device 6, or in another reconfigurable logic device to which device 6 connects to. In any of the two cases, the reconfigurable logic device that contains the RTC is programmed with an encrypted logical representation 5. The clock that increments the counter is generated internally by means of logic gates with inverters and feedback. This grants the counter a higher level of security since it is independent from external clock signals that could be manipulated. The security is even higher if the counter only allows access to an encrypted form of the current count value.

In another embodiment the counter would be in a device 17 where the executable representation 7 is executed. In this case, the use of a battery in the invention device would not be necessary. This approach would reduce costs, but it would also reduce the security since the counter would be located in a non-secure environment.

In another embodiment, the counter would be located in a remote platform accessible over a computer network. In this case the device invention would not require a battery and security would not me compromised.

### A. 15 Policies.

In an embodiment, a licence policy is implemented in one of the texts 13, 14 or 15, in such a way that the set 10 that is to be protected is then protected by the mentioned policy.

In another embodiment, the licence policy is perpetual, meaning that the right to use one instance of the object to be protected is granted without the existence of time limitations.

In another embodiment the licence policy is limited to a period of time, after which it is necessary to renew the license to continue using the object to be protected.

In another embodiment, the licence policy seeks to activate or deactivate selected features of the object to be protected. This way each feature can be commercialized independently.

In another embodiment the licence policy seeks to associate the object of the invention to either a user, or a group of users, or a device or a group of devices. This way it is commercialized based on the users or workstations allowed to use the object that is to be protected.

In another embodiment the licence policy seeks to limit the amount of uses of the object to be protected. This is useful for example when the set of algorithms 10 that are the object of protection are used to copy some content protected by intellectual property or when used to transform the mentioned content into other more advantageous content.

The license policy can combine several of the previous examples to adapt itself to more complex commercialization schemes.

### A.16 Data and/or data stream protection.

In an embodiment, like the one shown in Fig. 3, the protection method comprises the protection of a set of data 30 or data stream 31. At least part of them is selected and protected 11, 34 by means of encryption techniques like ciphering or coding, resulting in a protected object 12, 35. An algorithm or electronic circuit capable of performing the decryption 33 of this data set 30 or data stream 31 is required to decrypt the decrypted object. The algorithm or electronic circuit is expressed by means of a set 10 of texts 13, 14, 15 and is protected as described in the previous embodiments. In some cases it can be convenient to also enable an encryption algorithm 32 in the set 10 in a way that the cryptographic key is stored in one place only, the reconfigurable logic device 6, whether it is being used to encrypt or decrypt.

In an embodiment these texts are expressed with a plurality of algorithms written in different artificial languages. These algorithms are protected using any of the possible combinations of the protection methods described previously. This way the protection contained in this part of data set 30 or data stream 31 has been protected.

In an embodiment the data set 30 can be a file that contains the registers of a database. In the embodiment, part of the registers contained in the file are separated and encrypted by with a symmetric encryption algorithm. In this manner, this algorithm could be expressed by a set of texts 13, 14, 15 that would have any combination of the previous embodiments applied to it, resulting in a reconfigurable logic device 6 that stores the encryption key 4 and is programmed with the encrypted configuration 5, that together with the executable representation 7 in a device capable of executing logic instructions 17, allows the definition of a protection method for the data set 30. This representation 7, executable in a device capable of processing logic instruction 17, could be a *Common Object Model* (COM) component that accesses this database. In the same way any other type of software component designed to ease access to the database would be protected.

In another embodiment, data stream 31 can be a file that contains an audio sequence, for example a song encoded in an MP3 (*MPEG-1 Audio Layer 3*) format. Part of it can be encoded using, for example, a symmetric encryption algorithm. Thus, this algorithm could be expressed by means of a set of texts 13, 14, 15 that would have any combination of the previous embodiments applied to it, resulting in a reconfigurable logic device 6 that stores the encryption key 4 and is programmed with the encrypted configuration 5, that together with the representation 7, executable in a device capable of executing logic instructions 17, allows the definition of a protection method for this data stream 31. This representation 7, executable in a device instructions 17, could take the shape of a "*plug-in*" for a multimedia content player.

### A.17 Electronic core protection.

An electronic design that performs a specific task and is reusable in other designs is commonly called "*core"*. Nowadays, *cores* are used in practically every electronic design since they speed up development and reduce costs. The main problem that *core* suppliers find is that there are no standard mechanisms to guarantee that their *cores* are protected at every moment once they have been sent to their users.

In an embodiment,, the hardware platform 20, in which the device capable of executing logic instructions 17 (for example a PC with a CPU) is located, comprises the executable representation 7 of a set 10 of algorithms used to insert a *core* in an electronic design and transform it into a final binary representation of the electronic circuit. The reconfigurable logic device 6, which is implemented and communicates with the executable representation 7 according to any of the previous embodiments by means of communication means 8, for example a USB connection or a TCP/IP connection, contains at least part of the algorithms of the set 10. The selection of the part that is executed in the reconfigurable logic device 6 is done in such a way that the representation of the *core* while it is in the memory of the hardware platform 20 is unintelligible, since it is obfuscated by means of coding or encryption. Licence policies can also be determined for the *core,* in combination with other previous embodiments.

### B. Execution method.

Whenever the algorithms protected according to the previous section are to be executed, a concurrent execution of an instance of the representation 7, executable in a device capable of executing logic instructions 17, and the part of them that is stored in configuration set R 3, is required. For that, both parts communicate using communication means 8 that allow the exchange of information between configuration set R 3 and the instance of the executable representation 7. Sets of instructions or interfaces that manage communication through the communication mean 8 can be used in this embodiment.

In can be clarifying to highlight that, at the moment of execution, the device 6 contains within it a decrypted version of the configuration R 3, regardless of the fact this configuration stayed encrypted prior to execution in order to ease distribution or safe storage.

Thus, in an embodiment example of the access and/or execution method, in order to proceed with a correct execution of a protected algorithm, the processing of some information by the part of this algorithm that is stored in the configuration set R 3 is necessary. This configuration set R 3 is in turn located in the reconfigurable logic device 6 where it is executed.

The executable representation 7 issues requests to the reconfigurable logic device 6 each time it needs to process a set of data with functions that are only located within the reconfigurable logic device 6, or when it needs to inform the reconfigurable logic device 6 about the context that the executable representation 7 is in, or when it wants to influence in the internal context of the reconfigurable logic device 6 (that is private and secret, only accessible from the functions within the reconfigurable logic device 6). In the same way, the set of functions within the reconfigurable logic device 6 can issue the same requests to the executable representation 7.

From the above mentioned information it is deduced that the reconfigurable logic device 6 is not a mere processing server, rather it acts as an intelligent agent with personality and a life of its own, capable of influencing decisively on the executable representation 7. The way in which the reconfigurable logic device influences the executable representation 7 is configurable and is given by the functions and data in the reconfigurable logic device 6. Depending on the security policy that is implemented in the reconfigurable logic device 6 and the executable representation 7, be it an algorithm or an electronic circuit, it will only work according to what is established on that mentioned policy.

As it can be observed in the example, the communication between the reconfigurable logic device 6 and the executable representation 7 can be unidirectional or bidirectional, and it is performed through a communication mean 8 that can be operated by means of the interfaces 18 and 19.

Also, when interfaces 18 and 19 are unique, interdependent, and are associated to the machine or user that is executing them, the possibility of manipulating the interface 19, that is the weakest party since it is located in a less secure environment, would not be effective since interface 18 is protected and an interdependence relationship exists between them.

In another embodiment, the hardware platform 20, as an example, could be a personal computer (PC), and comprises the representation 7, executable in a device capable of executing logic instructions 17, e.g. a CPU, and a reconfigurable logic device 6, e.g. an FPGA, that use communication means 8 to communicate, e.g. a USB connection.

In another embodiment, the hardware platform 20, e.g. a PC, comprises the representation 7, executable in a device capable of executing logic instructions 17, e.g. a CPU, and another hardware platform 21, e.g. a mobile phone, that contains a reconfigurable logic device 6, e.g. an FPGA, that use communication means 8 to communicate, e.g. a radio link using *Bluetooth* specifications (*IEEE 802.15.1*).

In another embodiment , as the hardware platform 20, we can consider a video game console, e.g. Sony Play Station 3, that comprises means to read an optical disc with the executable representation 7, accessible from the device capable of executing logic instructions 17, e.g. a CPU, and another hardware platform 21, e.g. a USB "dongle" that contains a reconfigurable logic device 6, e.g. an FPGA, that use communication means 8, e.g. a USB connection, to communicate and protect the application, e.g. a video game, stored on the optical disk.

In another embodiment variant, the hardware platform 20, which, as an example, we could consider an electronic printed circuit, is used for example to control medical equipment, that includes many integrated circuits of which at least one is intelligent, like for example a CPU, an FPGA or an ASIC, and that executes an executable representation 7, and another hardware platform 21, e.g. an FPGA, that is integrated within the same printed circuit board or that is connected to it by means of a connection port, e.g. a connection port for PCI bus, and that protects the platform 20.

In another embodiment, the hardware platform 20, which we could consider, as an example, a PC with memory means that store a set of coded data, for example documents, music or videos, and also the executable representation 7 capable of decoding them in order to be used by the device capable of executing logic instructions 17, for example a CPU, and another hardware platform 21, for example a USB "dongle" that contains a reconfigurable logic device 6, e.g. an FPGA that uses communication means 8, e.g. a USB connection, to communicate and enable the decoding of the data.

### C. Distribution method.

Another embodiment can be defined for a distribution method for protected algorithms or electronic circuits that comprises the following steps:
- a stage 501 of protection of texts 13, 14 and 15 by means of the protection methods given in section A;
- a stage 502 in which both the representation 7, executable in a device capable of executing logic instructions 17, and a reconfigurable logic device 6, that contains an encryption key 4, are distributed;
- a stage 503 that comprises the distribution of the encrypted configuration 5 through communication means, like for example the distribution of a file over a computer network or through digital mediums like optical discs or static memory-based storage units;
- a stage 504 that comprises the programming of the encrypted configuration 5 into the reconfigurable logic device 6, that will be decrypted inside the device using the encryption key 4.

In a step 500, the execution sequence of the stages can be determined, using for example information supplied by a static or dynamic analysis of the behaviour of the algorithms or circuits to be protected.

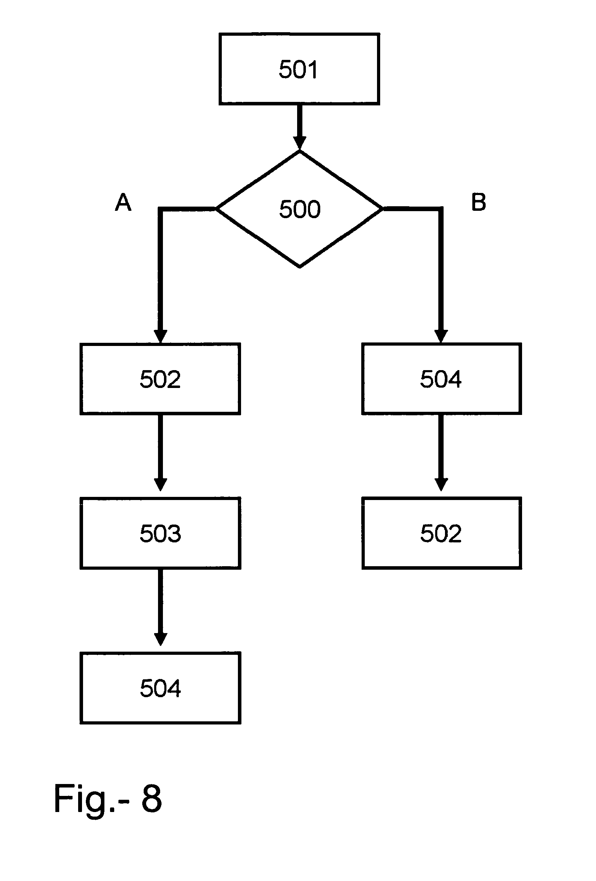

In an embodiment illustrated in Fig. 8, the mentioned method, depending on the requirements for protection vulnerability, can use the sequence of steps A: 501, 500, 502, 503, 504 or the sequence of steps B: 501, 500, 504, 502.

In an embodiment of the distribution method that follows the sequence A, a set of algorithms 9 contained in a text that describes a software application are protected with any of the protection methods of the previous embodiments in a stage 501. A copy of the representation 7 that is executable in a computer, is sent in a stage 502 to the software user, as well as a device that contains a reconfigurable logic device that has had an encryption key 4 programmed into it and that, e.g., can be integrated into a circuit board with the form of a USB key. A computer file over the Internet containing the encrypted configuration 5 is sent in a stage 503 to the software user. In a stage 504, the encrypted configuration is programmed into the reconfigurable logic device 6.

In another embodiment of the distribution method that follows the sequence B, a set of algorithms 9 contained in a text that describes a software application are protected with any of the protection methods of the previous embodiments in a stage 501. In a stage 504, the encrypted configuration 5 is programmed into the reconfigurable logic device 6, and in a stage 502, a copy of the executable representation 7 in a computer is sent to the software user, as well as a device that contains a reconfigurable logic device 6 that has had the encryption key 4 programmed into it and that, as an example, can be integrated into a circuit board with the form of a USB key.

In another embodiment, the stage 504 is repeated in time without the other stages being repeated, be it because the reconfigurable logic device 6 is not capable of retaining the programmed configuration as time elapses, or because the mentioned programmed configuration must change due to security policies.

In another embodiment of this method of distribution, an owner of content in the form of music files has a database with a plurality of encryption keys registered in it. Theses keys are related to ones contained in a plurality of reproduction methods of such files that are executed on a multimedia player.

Thus, the mentioned key 4 is associated to one multimedia player device, and a set of audio files are encoded using a symmetric encryption algorithm that is protected using the protection method previously shown. Given the inherent difficulties to access the protected information, derived from the synthesis of an encrypted configuration 5 of a reconfigurable logic device 6, and the confinement of the encryption key 4 within the reconfigurable logic device 6, the presence of the device within the player is required for its reproduction. Therefore, it is possible to distribute the mentioned audio files in such a way that they can only be reproduced on the mentioned multimedia player.

In the same way, and continuing with another embodiment, if a plurality of computers, or video game consoles, were equipped with a reconfigurable logic device 6 with a unique encryption key 4 (be it because the device 6 is integrated in the hardware or because it is distributed as a peripheral), it would be possible to distribute copies of software that would only work on the hardware that they where associated to by their device 6. If several of them are given the same one instead of giving a different key to each device 6, these would form a group, allowing the scope of operation of the copies to be controlled according to arbitrarily complex criteria.

### D. Protection device

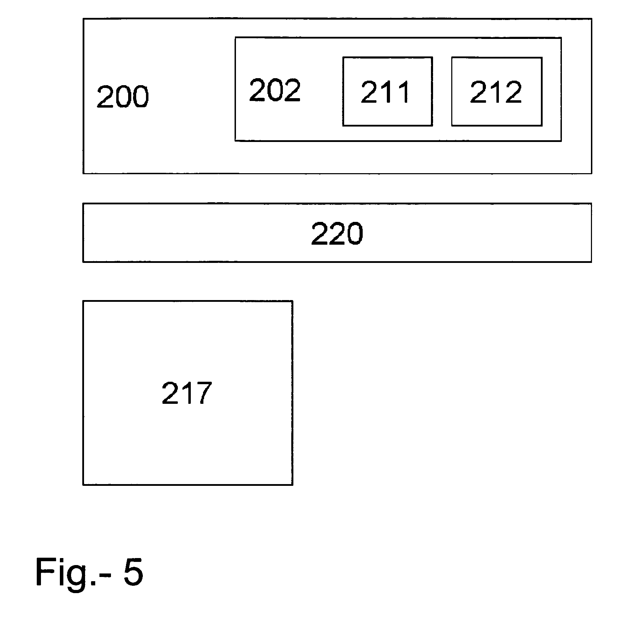

In the following embodiments, there are references to the Fig. 5 and to the electronic device 200 that comprises, at least, one reconfigurable logic device 6 in an integrated circuit (IC) 202, for example an FPGA or a CPLD. The reconfigurable logic device 6 in an IC in turn is comprised of an internal logic 212 and at least one medium to implement cryptographic methods 211, the later with the task of decrypting the configuration data which the logic is being programmed with.

The configuration set R 3 cannot be studied or modified, since it only stays in its decrypted form when it is programmed into the logic cells 211 of the reconfigurable device 202. In any other case, especially when it is stored as a computer file in a non-secure environment, the configuration set remains encrypted with an encryption key 4. Given the fact that the decryption mean 211, intended to implement cryptographic methods, contains the encryption key 4, configuration set R 3 will only find itself in a decrypted form after it has been programmed into the internal logic, right after being decrypted by the decryption mean 211. Therefore the device 200 is considered a secure electronic device, far beyond the mere obfuscation of the logic, inherent to the structure of reconfigurable logic devices, like the reconfigurable logic device 6 in an IC 202.

The electronic device 200 that provides the secure execution environment must be able to communicate using any type of communication mean 220 with the device capable of executing logic instructions 17, whose implementation as an IC is represented as 217. Some of the examples depending on the embodiments would be: the USB port, the TCP/IP protocol, *Bluetooth*, RS-232, parallel port, *FireWire*, PCI, PCMCIA, smart card reader, Wi-Fi, etc.

In another embodiment, the mentioned device 200 could be an electronic key or dongle that communicates using a USB interface.

In an embodiment, like the one where the protection of an electronic circuit is desired, the electronic device 200 could be connected or integrated in the same circuit board as the electronic circuit that is to be protected. In this case the device 2000 would work as a TPM that allows safe execution of several functions, substantially reducing the vulnerability of the circuit against modification, cloning, distribution, reverse engineering techniques or non-authorised use.

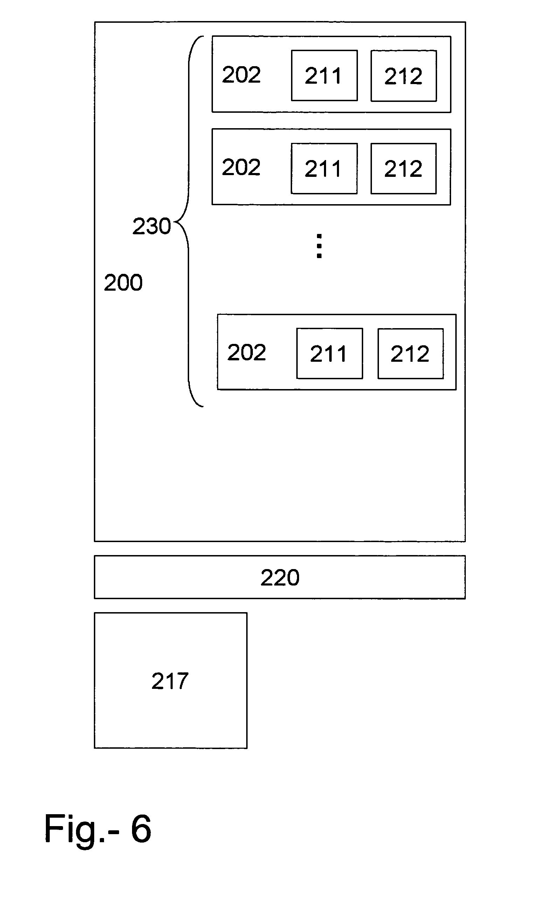

In another embodiment, shown in Fig. 6, the electronic device 200 comprises a set 230 of reconfigurable logic devices.

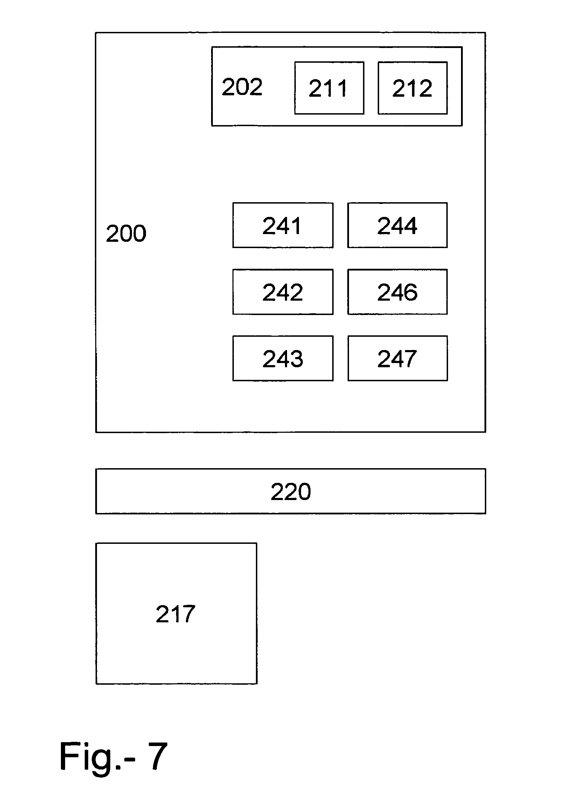

In another embodiment that is shown in Fig. 7, the electronic device 200 comprises memory means 241, a central processing unit 242, means to communicate with a remote platform 243, means to count time 244, and means 247 to perform identity checks using biometric parameters.

In another embodiment, the electronic device 200 comprises memory means 246, in which the encrypted configuration 5 can be stored and updated, and from where the electronic device can automatically load the configuration to program itself.

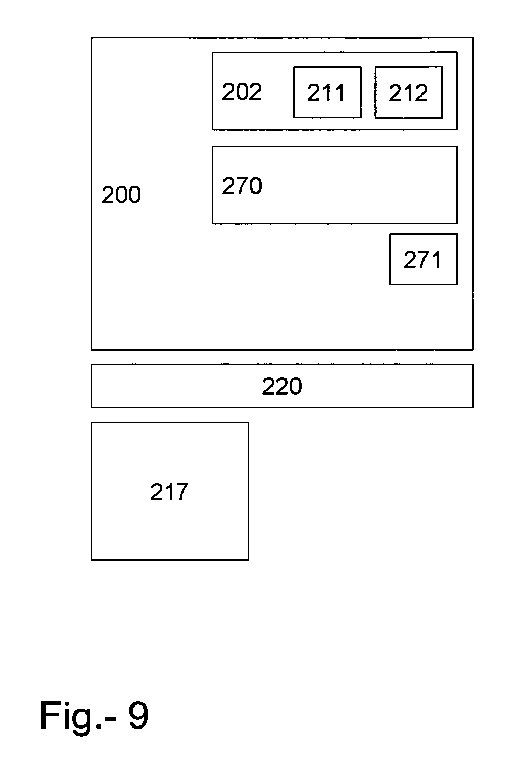

In another embodiment that is shown in Fig. 9, the electronic device 200 comprises means for autonomous time counting, for example by using a battery 271 and a mean that implements a real time clock 270 (RTC), as it was explained in a previous embodiment. Continuing this example, the elements external to the reconfigurable logic device 6, like the RTC 270 and the battery 271, must be prepared against external manipulation. At least the RTC 270 communication with the IC 202 is ciphered in such a way that it cannot be replaced by another modified RTC and would not be vulnerable to attacks that attempt to modify the count by means of manipulating the battery or the interaction with the inputs and outputs of the RTC 270 beyond the operating ranges given in its technical specifications. In another embodiment the RTC 270 is located inside a reconfigurable logic device, that could be an IC or an FPGA, or other acting as its peripheral, and the clock required to perform the count would be generated within the IC.

### E. Distribution system.

The set of the electronic device 200, the communication means 220 and the device capable of executing logic instructions 217, according to any of the embodiments previously shown, form a protected information distribution system. This system therefore comprises all the means and devices required to implement any of the variants of the distribution method.

In another embodiment, the electronic device 200 is a USB key with an FPGA and with a static memory module 241 that allows data to be stored and that is protected by the algorithms expressed through the logic configuration R 3 programmed into the reconfigurable logic device 6. This variant allows the electronic device 200 to be used not only to protect and access both the content and the algorithms implemented within a software program when it is executed, but also distribute it in such a way that there is no need for any other distribution method like Internet or optical discs. The same case would apply for the distribution of music, videos, documents, or any other type of data within the same electronic device 200 that would protect the access to them when it is being executed.

## Claims

1. Protection method of a set (10) of procedures or algorithms expressed at least in part in a text (9) by means of an *artificial language* (16) that comprises the following steps:
a. Selection (101) of at least a part of the text (9) expressed in the mentioned *artificial language* (16) into a first set of fragments (1) intended to configure at least one reconfigurable logic device (6), the remaining part of the text (9) defining a second set of fragments (2) that together with the remaining part of the set (10) of procedures or algorithms are intended to work in a device that executes logic instructions (17);
b. Synthesis (102) of a configuration set R (3) suitable to be programmed into a reconfigurable logic device (6) from the set of procedures or algorithms expressed in an *artificial language* (16) contained in a first set of fragments (1);
c. Protection (103) of the configuration set R (3) using cryptography methods determined by a key (4) obtaining a configuration (5), storing the mentioned key (4) in the reconfigurable logic device (6);
d. Programming (104) a reconfigurable logic device (6) with the encrypted configuration obtained from (5);
e. Obtaining (105) a representation (7) that works in a device capable of executing logic instructions (17) from the second set of fragments (2) and from the remaining part of the set (10) of procedures or algorithms;
f. Association (106) of communication means (8) that communicate the representation (7) with the reconfigurable logic device (6).

2. Method according to claim 1 wherein the *artificial language* (16) describes an electronic circuit.

3. Method according to claim 1 wherein the *artificial language* (16) is a programming language.

4. Method according to any of the previous claims wherein the device capable of executing logic instructions (17) and the reconfigurable logic device (6) are located on the same hardware platform (20).

5. Method according to any one of the claims 1-4 wherein the device capable of executing logic instructions (17) is located in a first hardware platform (20) and the reconfigurable logic device (6) is located on a second hardware platform (21).

6. Method according to any of the previous claims wherein at least one of the sets of instructions used to communicate with the communication means, contains information that univocally identifies at least one hardware platform (20, 21), that authorises the execution of the executable representation (7) by a device capable of executing logic instructions (17) from the second group of fragments (2) and from the remaining part of the set (10) of procedures or algorithms.

7. Method according to any of the previous claims wherein both the first group of fragments (1) intended to be used to configure at least one reconfigurable logic device and the second group of fragments (2) intended to work in a device capable of executing logic instructions (17) are processed to work simultaneously in a set of reconfigurable logic devices (40).

8. Method according to any of the previous claims wherein the time of usage of the reconfigurable logic device (6) is controlled to limit the use of the mentioned reconfigurable logic device (6).

9. Method according to any of the previous claims wherein the encryption key (4) is updated over the time by means of an external program.

10. Method for the protection of data (11), like that contained in a document, and data streams (12) by encryption (32) and decryption (33) means expressible in an *artificial language* (16) used to program computers or describe electronic circuits, the mentioned encryption and decryption means being protected by any of the preceding claims.

11. Method of execution of a set of procedures or algorithms expressed in an *artificial language* (16), to program computers or describe electronic circuits, or to access data (11) like that contained in a document and data streams (12), protected according to any of the preceding claims that comprises the concurrent execution of:
a. a executable representation (7) by a device capable of executing logic instructions (17) of a hardware platform (20) from the second set of fragments (2) and from the remaining part of the set (10) of procedures or algorithms; and;
b. a configuration set (5) programmed in a reconfigurable logic device (6);
using two sets of instructions (18, 19) that are used as communication means and that establish the communication between the mentioned executable representation (7) by a device capable of executing logic instructions (17) and the reconfigurable logic device (6), in such a way that in order for the mentioned executable representation (7) by a device capable of executing logic instructions (17) to be operative it requires the methods, algorithms or procedures programmed as the configuration (5) in a reconfigurable logic device (6) by any of the methods described in the previous claims.

12. Protected distribution method for a set of procedures or algorithms expressed in a text (9) by means of an *artificial language* (16) that comprises a method of protection according to any one of the claims 1-10 and an execution method of the mentioned set of procedures or algorithms according to the claim 11.

13. Computer program (401) that comprises programming means adapted to perform the steps in claim 1 when the mentioned program is executed on a computer.

14. Device for the protection of a set of procedures or algorithms expressed in a text (9) by means of an artificial language (16) or data (11), like those contained in a document and data streams (12), protected according to any one of the claims 1-12, that comprises:
a. a secure electronic device (200) that comprises a reconfigurable logic device (202), where the mentioned reconfigurable logic device (202) in turn comprises:
i. at least one mean intended to implement cryptographic methods (211); and;
ii. an internal logic (212),
b. communication means (8) that communicate the mentioned secure electronic device (200) with the mentioned device capable of executing logic instructions (217);
wherein the programming data (5) intended to configure the internal logic (212) of the reconfigurable logic device (202), which are protected by cryptographic methods determined by a key (4) that is inside the secure electronic device (200), are decrypted by means of the mean intended to implement cryptographic methods (211), and since it comprises communication means (8) that allow the concurrent operation of a representation (7) that works on a device capable of executing logic instructions (217) from the second group of fragments (2) and from the remaining part of the set (10) of procedures or algorithms, and a configuration set (5) programmed in a reconfigurable logic device (6) that is inside the secure electronic device (200).

15. System to securely distribute a set of procedures or algorithms expressed in a text (9) by means of an artificial language (16) that comprises:
a. A secure electronic device (200) according to claim 14 that comprises a reconfigurable logic device (202);
b. A device capable of executing logic instructions (217) from a second set of fragments (2) and from the remaining part of the set (10) of procedures and algorithms;
c. Communication means (8) that communicate the mentioned secure electronic device (200) with the mentioned device capable of executing logic instructions (217).
